# EUROPÄISCHE PATENTANMELDUNG

(11) **EP 4 036 518 A1**
(43) Veröffentlichungstag der Anmeldung: **03.08.2022**
(21) Anmeldenummer: 22153542.0
(22) Anmeldetag: 26.01.2022
(51) Int. Cl.: G01B 11/24, G01B 5/008, G01B 11/00

(54) **VERFAHREN UND VORRICHTUNG ZUM MESSEN EINER VERZAHNUNG**

(30) Priorität: 28.01.2021 DE 102021101957
(71) Anmelder: Klingelnberg GmbH, 42499 Hückeswagen (DE)
(72) Erfinder: Finkeldey, Markus, 45527 Hattingen (DE); Stefer, Jonas, 51515 Kürten (DE)
(74) Vertreter: Janke Scholl Patentanwälte PartG mbB

(57) **Zusammenfassung**

Verfahren, mit den Verfahrensschritten: Messen einer Geometrie einer Verzahnung (8) mittels eines optischen Messsystems (4), wobei eine numerische Apertur des optischen Messsystems (4) einstellbar ist und wobei die numerische Apertur des optischen Messsystems (4) in Abhängigkeit von mindestens einer geometrischen Kenngröße der zu messenden Verzahnung (8) angepasst ist und/oder vergrößert oder verkleinert wird.

## Beschreibung

Die vorliegende Erfindung betrifft ein Verfahren und eine Vorrichtung zum Messen von Verzahnungen.

Optische Messsysteme gewinnen in der Verzahnungsmesstechnik zunehmend an Relevanz, da sie immer näher an die Genauigkeit taktiler Messsysteme heranreichen und häufig wesentlich schneller arbeiten als taktile Messsysteme.

Die taktile Teilungsmessung gehört zu den Standardmessaufgaben in der Verzahnungsanalyse und -bewertung. Hierbei werden, z.B. für eine Evolventenverzahnung, alle Abstände zwischen Evolventen auf der linken Seite aller Zähne und der rechten Seite aller Zähne, jeweils am Teilkreisdurchmesser und auf einer vorher definierten Messhöhe, gemessen. Unterschieden werden dabei zwei taktile Messarten, die Teilungsmessung über eine Punktantastung genau auf dem Teilkreisdurchmesser und die Messung eines Abschnitts der Flankenlinie am Teilkreisdurchmesser, mit anschließender Mittelung der Einzelmesspunkte. Die Messung anhand der Flankenlinie liefert robustere Ergebnisse, jedoch auf Kosten einer höheren Messzeit.

Anschließend werden die Messergebnisse mit einem Sollabstand einer Soll-Geometrie der Verzahnung verglichen und beispielsweise nach VDE- oder Firmen-Normen oder allgemeinen Normen wie DIN, ISO oder AGMA, bewertet. Messungen an abweichenden Durchmessern, also nicht direkt auf dem Teilkreisdurchmesser, und einer oder mehrerer Messhöhen sind dabei möglich.

Die Messdauer der taktilen Teilungsmessung ist relativ lang, insbesondere bei der Messung anhand der Flankenlinie, da jeder Abschnitt einer Flankenlinie auf jedem Zahn an exakt dem richtigen Durchmesser und der passenden Höhe gemessen werden muss. Der taktile Messtaster muss in jede Zahnlücke kollisionsfrei eintauchen, mit den jeweiligen Zahnflanken in Anlage gebracht werden und in jeder Zahnlücke zwei Messungen vollführen. Nach den Messungen innerhalb einer Zahnlücke wird der Messtaster zurückgezogen, das Zahnrad um eine Zahnteilung gedreht und der Messvorgang wird für die nächste Lücke wiederholt.

Eine solche Teilungsmessung könnte grundsätzlich mit einem berührungslos messenden optischen System mit einer wesentlich kürzeren Messdauer durchgeführt werden, in dem das Zahnrad kontinuierlich vor dem optischen System rotiert, wobei kein Einfädeln in die Lücke und kein Antasten der Flanken erforderlich ist. Jedoch kann es durch die Geometrie der Verzahnung zu Abschattungen während der optischen Messung kommen, so dass die geforderte Abbildungsqualität nicht erreicht wird. Dies gilt nicht nur für die optische Teilungsmessung, sondern gleichermaßen auch für die optische Messung anderer geometrischer Merkmale einer Verzahnung, bei deren Messung es ebenfalls zu Abschattungen kommen kann.

Vor diesem Hintergrund liegt der Erfindung die technische Problemstellung zugrunde, ein Verfahren und eine Vorrichtung anzugeben, die eine verbesserte optische Verzahnungsmessung ermöglichen.

Die voranstehend beschriebene technische Problemstellung wird jeweils gelöst durch die unabhängigen Ansprüche. Weitere Ausgestaltungen der Erfindung ergeben sich aus den abhängigen Ansprüchen und der nachstehenden Beschreibung.

Gemäß einem ersten Aspekt betrifft die Erfindung ein Verfahren, mit den Verfahrensschritten: Messen einer Geometrie einer Verzahnung mittels eines optischen Messsystems, wobei eine numerische Apertur des optischen Messsystems einstellbar ist und wobei die numerische Apertur des optischen Messsystems in Abhängigkeit von mindestens einer geometrischen Kenngröße der zu messenden Verzahnung angepasst ist. Alternativ oder ergänzend wird die numerische Apertur des optischen Messsystems in Abhängigkeit von mindestens einer geometrischen Kenngröße der zu messenden Verzahnung vergrößert und/oder verkleinert.

Durch die Anpassung oder Adaption der numerischen Apertur an die Geometrie der Verzahnung kann insbesondere eine Abschattung während der optischen Messung vollständig vermieden oder reduziert werden. So ist für die optische Messung zwar aufgrund der ggf. reduzierten numerischen Apertur eine maximal mögliche Messauflösung reduziert, jedoch wird eine im Wesentlichen vollständige Abbildung mit im Wesentlichen voller rückgestrahlter Beleuchtungsintensität gewährleistet, da eine Abschattung während der optischen Messung vollständig vermieden oder reduziert wird.

Wenn vorliegend von einem "Messen einer Geometrie der Verzahnung" gesprochen wird, so handelt es sich dabei insbesondere um das messtechnische Bestimmen von Ist-Werten einer oder mehrerer geometrischer Kenngrößen der Verzahnung, wie z.B. Profilform, Flankenform, Zähnezahl, Außendurchmesser, Zahnteilung, Lückweite, Modul, Schrägungswinkel, Spiralwinkel, Kopfkegel, Fußkegel, Kopfrücknahme, Fußrücknahme, Endenrücknahme, Profilballigkeit, Breitenballigkeit oder dergleichen. Hierzu können beispielsweise einzelne Punkte und/oder Profillinien und/oder Flankenlinien von Zahnflanken der Zähne der Verzahnung gemessen werden.

Das Anpassung und/oder Vergrößern und/oder Verkleinern der numerischen Apertur erfolgt insbesondere anhand mindestens eines bekannten Soll-Werts mindestens einer geometrischen Kenngröße der zu messenden Verzahnung. In der betrieblichen Praxis wird in den meisten Fällen keine gänzlich unbekannte Verzahnung gemessen. So sind z.B. für Messungen, die im Rahmen einer Qualitätskontrolle fertigungsbegleitend durchgeführt werden, üblicherweise Daten zu einer Soll-Geometrie der Verzahnung in einem Datenspeicher hinterlegt.

Die Anpassung der numerischen Apertur kann insbesondere automatisiert anhand mindestens eines bekannten Soll-Werts mindestens einer geometrischen Kenngröße der zu messenden Verzahnung erfolgen. Hierbei kann es sich beispielweise um Soll-Werte einer oder mehrere geometrischer Kenngrößen der Verzahnung handeln, wie z.B. Außendurchmesser, Zähnezahl, Schrägungswinkel, Spiralwinkel, Steigungsrichtung, Spiralrichtung, Modul, Zahnteilung, Lückweite oder dergleichen.

Es kann vorgesehen sein, dass die geometrische Kenngröße eine Zahnteilung oder eine Lückweite der Verzahnung ist.

Insbesondere handelt es sich dabei um die Zahnteilung auf Höhe eines Teilkreisdurchmessers der Verzahnung, also beispielsweise die Normalteilung oder die Stirnteilung am Teilkreis. Alternativ kann die Zahnteilung auf Höhe eines Kopfkreisdurchmessers oder eines Fußkreisdurchmessers der Verzahnung vorgegeben sein.

Gleichermaßen kann eine Lückweite der Verzahnung auf Höhe des Teilkreises im Normal- oder Stirnschnitt vorgegeben sein. Alternativ kann die Lückweite auf Höhe eines Kopfkreisdurchmessers oder eines Fußkreisdurchmessers der Verzahnung vorgegeben sein.

Die Lückweite ist vorliegend der Abstand zweier benachbarter, einander zugewandter Zahnflanken der Verzahnung, also z.B. der Abstand einer linken Flanke eines ersten Zahns zu einer rechten Flanke eines zweiten, benachbarten Zahns. Die Lückweite kann z.B. eine Zahnlückenweite auf Höhe eines Teilkreisdurchmessers sein oder eine Zahnlückengrundweite im Fußbereich der Verzahnung sein. Weiter kann die Lückweite eine Zahnlückenweite auf Höhe eines Kopfkreisdurchmessers sein.

Die numerische Apertur kann beispielsweise für eine Verzahnung mit großer Zahnteilung größer gewählt sein als für eine Verzahnung mit kleinerer Zahnteilung. Mit anderen Worten wird die lichte Weite einer Zahnlücke für eine jeweilige Messaufgabe berücksichtigt, so dass es insbesondere nicht zu Abschattungen während der optischen Messung kommt oder es lediglich zu geringfügigen Abschattungen während der optischen Messung kommt.

Es können eine, zwei oder mehr geometrische Kenngrößen der Verzahnung zur Anpassung der numerischen Apertur berücksichtigt werden, insbesondere ausgewählt aus den nachfolgend aufgelisteten Kenngrößen: Profilform, Flankenform, Zähnezahl, Außendurchmesser, Zahnteilung, Lückweite, Modul, Schrägungswinkel, Spiralwinkel, Kopfkegel, Fußkegel, Kopfrücknahme, Fußrücknahme, Endenrücknahme, Profilballigkeit, Breitenballigkeit oder dergleichen.

Gemäß einer Ausgestaltung des Verfahrens kann vorgesehen sein, dass Randstrahlen des optischen Messsystems nicht von einem Zahn der Verzahnung oder von mehreren Zähnen der Verzahnung abgeschattet werden. Die numerische Apertur ist derart an die Geometrie der Verzahnung angepasst und/oder wird vergrößert oder verkleinert, dass ein Messpunkt vollständig abgebildet wird.

Nach einer Ausgestaltung des Verfahrens kann vorgesehen sein, dass ein erster Flanken- und/oder Profilabschnitt der Verzahnung mit einer größeren numerischen Apertur gemessen wird als ein zweiter Flanken- und/oder Profilabschnitt der Verzahnung. Je nachdem, auf welcher Zahnhöhe die zu erfassenden Messpunkte für einen jeweiligen Messabschnitt liegen, kann daher die numerische Apertur größer oder kleiner eingestellt sein. Soweit ein Messpunkt nahe am Zahnkopf liegt, kann dieser z.B. mit einer höheren numerischen Apertur gemessen werden als ein Messpunkt, der tiefer in der Zahnlücke, d.h. nahe dem Zahnfuß liegt, um Abschattungen zu vermeiden oder zu reduzieren.

Alternativ oder ergänzend kann vorgesehen sein, dass die numerische Apertur während der Messung entlang eines Messwegs angepasst wird. Beispielsweise kann die numerische Apertur entlang eines Messwegs erhöht oder reduziert werden. Beispielsweise kann die numerische Apertur entlang eines Messwegs stufenweise oder kontinuierlich erhöht oder reduziert werden.

Alternativ oder ergänzend kann vorgesehen sein, dass die numerische Apertur periodisch über den Drehwinkel der Verzahnung erhöht und reduziert wird. Wird die zu messende Verzahnung während der Messung beispielsweise vor dem optischen Messsystem rotiert, wechseln sich Kopf-, Flanken- und Fußsegmente der Zähne aufeinanderfolgend ab. Dementsprechend kann auch die Apertur stufenweise zwischen beispielsweise zwei oder mehr Stufen angepasst werden oder kontinuierlich nachgeführt werden.

Alternativ oder ergänzend kann vorgesehen sein, dass die numerische Apertur während der optischen Messung konstant gehalten wird. Beispielsweise kann für eine Messaufgabe die größtmögliche numerische Apertur bestimmt werden, für die es für keinen der zu erfassenden Messpunkte zu einer Abschattung kommt. Mit anderen Worten kann für jeden der zu erfassenden Messpunkte die jeweilige maximale numerische Apertur bestimmt werden und aus diesen Werten die minimale Apertur ausgewählt werden. Zwar werden dabei ggf. einige Messpunkte nicht mit der für diese speziellen Messpunkte größtmöglichen Apertur gemessen. Jedoch wird für alle Messpunkte eine hohe Abbildungsqualität gewährleistet.

Die numerische Apertur kann insbesondere automatisiert angepasst werden.

Gemäß einer Ausgestaltung des Verfahrens ist vorgesehen, dass die numerische Apertur für einen Messpunkt anhand einer mittels eines Bildsensors detektierten Lichtintensität eingestellt wird, wobei insbesondere diejenige Apertur eingestellt wird, für die bei konstanter Beleuchtungsstärke einer Lichtquelle eine maximale Intensität detektiert wird.

Alternativ oder ergänzend kann vorgesehen sein, dass die numerische Apertur rechnerisch bestimmt wird, insbesondere anhand einer vorgegebenen Sollgeometrie der Verzahnung und eines vorgegebenen Messwinkels. Soweit die Sollgeometrie und ein Messwinkel, d.h. die Neigung der optischen Achse des optischen Messsystems relativ zu der zu messenden Verzahnung, bekannt sind, kann die numerische Apertur rechnerisch z.B. derart angepasst werden, dass Randstrahlen eines Lichtkegels des optischen Messsystems während der optischen Messung nicht abgeschattet werden. Weiter kann ein vorgegebener Toleranzbereich der Verzahnung berücksichtigt werden und als Aufmaß zur Sollgeometrie addiert werden.

Nach einer Ausgestaltung der Verzahnung weist das optische Messsystem einen konfokalen Sensor auf, wobei die Geometrie der Verzahnung durch konfokale Abstandsmessung erfasst wird, insbesondere durch konfokal-chromatische Abstandsmessung.

Alternativ oder ergänzend kann vorgesehen sein, dass ein Messen einer Geometrie der Verzahnung mittels eines taktilen Messsystems erfolgt.

Insbesondere kann vorgesehen sein, dass sowohl eine Messung mittels des taktilen Messsystems erfolgt als auch eine Messung mit dem optischen Messsystem erfolgt. Insbesondere können einzelne taktil erfasste Messpunkte als Referenz- oder Stützpunkte für eine Auswertung optisch erfasster Messpunkte dienen.

Gemäß einem zweiten Aspekt betrifft die Erfindung ein Verfahren, mit den Verfahrensschritten: Messen einer Geometrie einer ersten Verzahnung gemäß einem voranstehend beschriebenen, erfindungsgemäßen Verfahren; Messen einer Geometrie einer zweiten Verzahnung gemäß einem voranstehend beschriebenen, erfindungsgemäßen Verfahren; wobei die erste Verzahnung eine von der zweiten Verzahnung verschiedene Geometrie aufweist; wobei die erste Verzahnung mit einer ersten numerischen Apertur gemessen wird; wobei die zweite Verzahnung mit einer zweiten numerischen Apertur gemessen wird und wobei die erste numerische Apertur von der zweiten numerischen Apertur verschieden ist.

Soweit beispielsweise zwei Verzahnungen verschiedener Geometrie aufeinanderfolgend auf ein- und derselben Messmaschine gemessen werden, kann die numerische Apertur verzahnungsspezifisch angepasst werden, um Abschattungen während der jeweiligen optischen Messung zu vermeiden oder zu reduzieren.

Beispielsweise können sich die erste und zweite Verzahnung hinsichtlich ihres Moduls, ihres Schrägungswinkels oder anderer die jeweilige Geometrie bestimmenden Merkmale unterscheiden.

Gemäß einem dritten Aspekt betrifft die Erfindung eine Vorrichtung zum Messen von Verzahnungen, mit einem optischen Messsystem zum Messen einer Geometrie einer Verzahnung; mit einer Aufnahme zum Halten einer zu messenden Verzahnung und mit einer Steuerung zum Steuern eines Messablaufs, wobei die Steuerung zur Durchführung eines erfindungsgemäßen Verfahrens eingerichtet ist.

Die Vorrichtung kann beispielsweise eine Koordinatenmessmaschine sein, die eine Verzahnungsmessmaschine ist. Die Verzahnungsmessmaschine kann eine Spindel zum Halten und Drehantreiben einer zu messenden Verzahnung aufweisen.

Die Verzahnungsmessmaschine kann eine Mehrzahl CNC-gesteuerter Achsen aufweisen.

Es kann vorgesehen sein, dass das optische Messsystem ein Linsensystem mit einstellbarer Brennweite aufweist. Alternativ oder ergänzend kann vorgesehen sein, dass das optische Messsystem eine Linse mit einstellbarer Brennweite aufweist, eine sogenannte adaptive Linse.

Die Vorrichtung kann ein taktiles Messsystem zum Messen einer Geometrie einer Verzahnung aufweisen. Alternativ oder ergänzend kann das optische Messsystem einen konfokalen Sensor aufweisen, insbesondere einen konfokal chromatischen Sensor aufweisen.

Nachfolgend wird die Erfindung anhand einer Ausführungsbeispiele darstellenden Zeichnung näher beschrieben. Es zeigen jeweils schematisch:
- Fig. 1: eine erfindungsgemäße Vorrichtung zum Messen von Verzahnungen;
- Fig. 2: eine optische Messung mit einer Abschattung;
- Fig. 3: eine optische Messung ohne eine Abschattung;
- Fig. 4: ein optisches Messsystem;
- Fig. 5A: das optische Messsystem mit einer adaptiven Linse;
- Fig. 5B: das optische Messsystem mit einem Linsensystem.

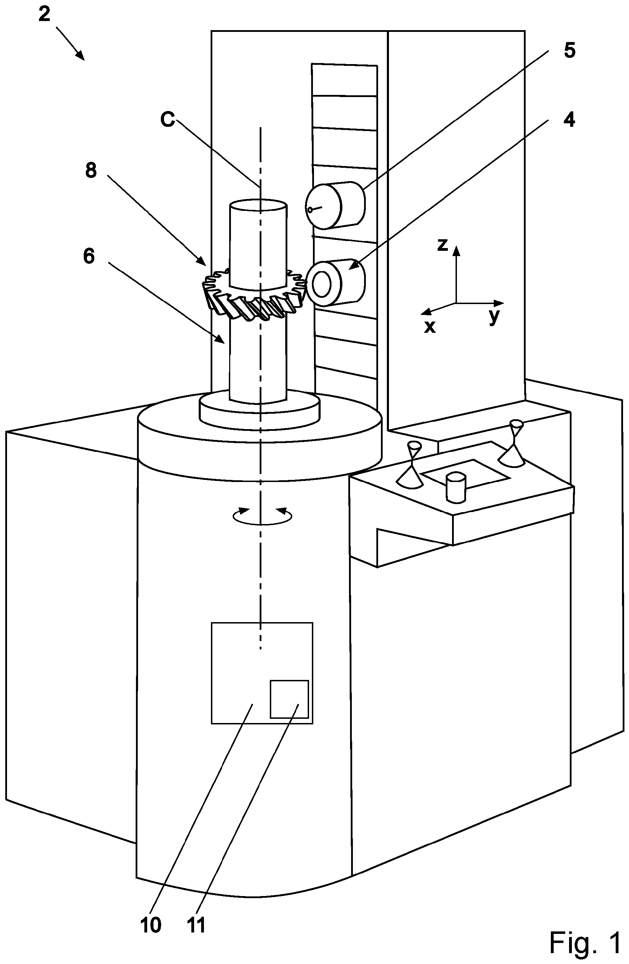

Fig. 1 zeigt eine Vorrichtung 2 zum Messen von Verzahnungen. Die Vorrichtung 2 hat ein optisches Messsystem 4 zum Messen einer Geometrie einer Verzahnung. Die Vorrichtung 2 hat ein taktiles Messsystem 5 zum Messen einer Geometrie einer Verzahnung. Die Vorrichtung 2 hat eine Aufnahme 6 zum Halten einer zu messenden Verzahnung 8 und eine Steuerung 10 zum Steuern eines Messablaufs.

Die Steuerung 10 ist zur Durchführung eines erfindungsgemäßen Verfahrens eingerichtet, mit den Verfahrensschritten: Messen einer Geometrie der Verzahnung 8 mittels des optischen Messsystems 4, wobei eine numerische Apertur des optischen Messsystems 4 einstellbar ist und wobei die numerische Apertur des optischen Messsystems in Abhängigkeit von mindestens einer geometrischen Kenngröße der zu messenden Verzahnung 8 angepasst ist und/oder vergrößert oder verkleinert wird.

Mindestens ein Soll-Wert der mindestens einen geometrischen Kenngröße ist in einem Datenspeicher 11 hinterlegt, der Teil der Steuerung 10 ist oder auf den die Steuerung 10 zugreifen kann. Der Soll-Wert kann beispielsweise ein aus einer Verzahnungsauslegung der zu messenden Verzahnung bekannter Soll-Wert sein.

Die Verzahnung ist um eine Achse C drehbar. Das optische Messsystem 4 ist in x-, y- und z-Richtung translatorisch verschiebbar. Die Achsbewegungen sind von der Steuerung 10 steuerbar.

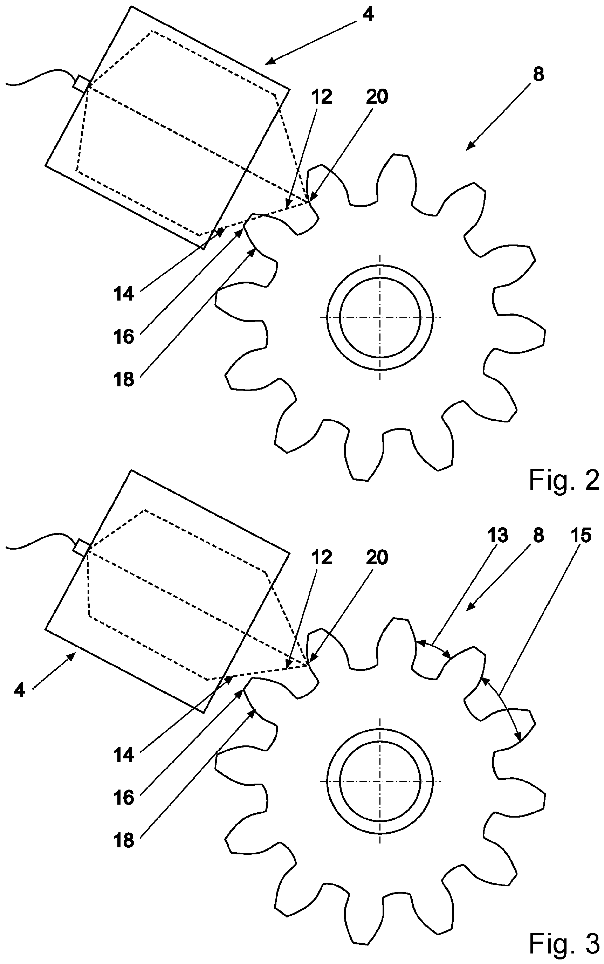

Fig. 2 zeigt eine optische Messung der Verzahnung 8 mit dem optischen Messsystem 4. Hierbei wird ein Randstrahl 12 eines Lichtkegels 14 durch einen Zahnkopf 16 eines Zahns 18 der Verzahnung 8 abgeschattet und träg daher nicht zur Abbildung eines Messpunkts 20 bei. Eine solche Abschattung soll erfindungsgemäß insbesondere teilweise oder vollständig vermieden werden.

Die numerische Apertur wird daher gemäß Fig. 3 an die Geometrie der Verzahnung 8 angepasst, in dem z.B. eine Zahnteilung 15 und/oder Lückweite 13 der Verzahnung 8 berücksichtigt wird. Wie Fig. 3 zu entnehmen, ist die numerische Apertur des optischen Messsystems 4 verringert worden, so dass der Randstrahl 12 des Lichtkegels 14 nicht mehr durch den Zahnkopf 16 des Zahns 18 abgeschattet wird.

Das optische Messsystems 4 ist eine Einrichtung zur konfokal-chromatischen Abstandsmessung.

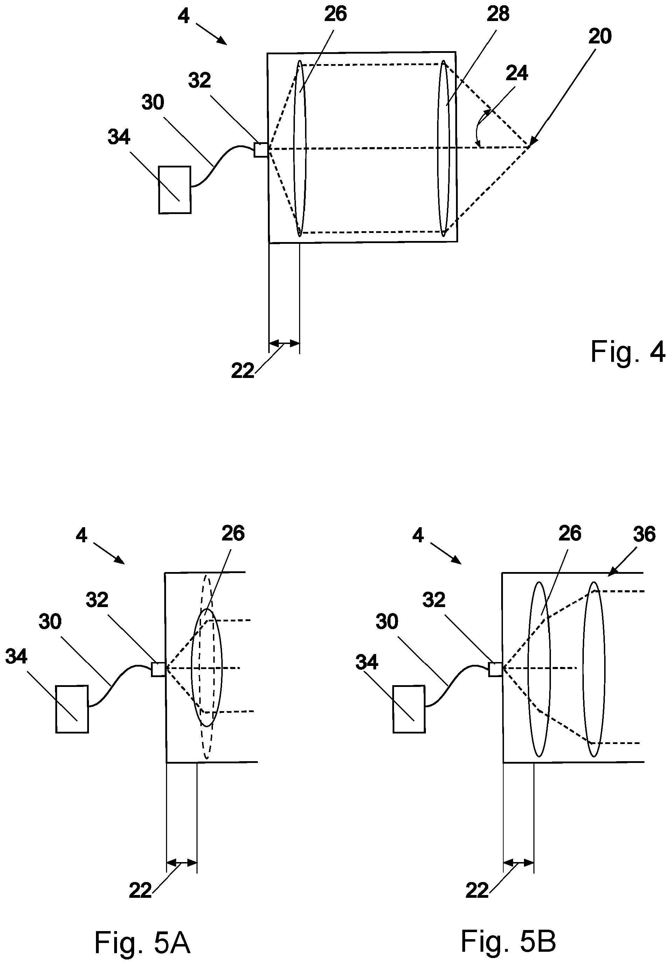

Die numerische Apertur NA des optischen Systems 4 ist in bekannter Weise definiert als Sinus des halben objektseitigen Öffnungswinkels 24 des optischen Systems 4 multipliziert mit einem Brechungsindex, der z.B. für Luft 1 beträgt (Fig. 4).

Zur Verringerung der numerischen Apertur kann ein Abstand 22 einer Kollimatorlinse 26 zu einer optischen Faser 30 verringert werden, um die Ausleuchtung einer Fokuslinse 28 zu reduzieren. Um die Lichtausbeute dennoch zu maximieren, sollte der Fokus der Kollimatorlinse 26 auf einem Faserausgang 32 der mit einer Lichtquelle 34 gekoppelten optischen Faser 30 liegen und an die numerische Apertur der optischen Faser 30 angepasst ein.

Hierzu kann die Kollimatorlinse 26 als adaptive Linse 26 mit einstellbarer Brennweite ausgelegt sein, wie in Fig. 5A gezeigt.

Alternativ oder ergänzend kann dies durch ein Linsensystem 36 mit variabler Brennweite erreicht werden, wie in Fig. 5B gezeigt.

## Patentansprüche

1. Verfahren, mit den Verfahrensschritten:
- Messen einer Geometrie einer Verzahnung (8) mittels eines optischen Messsystems (4),
- wobei eine numerische Apertur des optischen Messsystems (4) einstellbar ist und
- wobei die numerische Apertur des optischen Messsystems (4) in Abhängigkeit von mindestens einer geometrischen Kenngröße der zu messenden Verzahnung (8)
- angepasst ist
und/oder
- vergrößert oder verkleinert wird.

2. Verfahren nach Anspruch 1,
**dadurch gekennzeichnet, dass**
- die geometrische Kenngröße eine Zahnteilung (15) oder eine Lückweite (13) Verzahnung (8) ist.

3. Verfahren nach einem der voranstehenden Ansprüche,
**dadurch gekennzeichnet, dass**
- Randstrahlen (12) des optischen Messsystems (4) nicht von einem Zahn (18) der Verzahnung (8) abgeschattet werden.

4. Verfahren nach einem der voranstehenden Ansprüche,
**dadurch gekennzeichnet, dass**
- ein erster Flanken- und/oder Profilabschnitt der Verzahnung (8) mit einer größeren numerischen Apertur gemessen wird als ein zweiter Flanken- und/oder Profilabschnitt der Verzahnung (8)
und/oder
- die numerische Apertur während der Messung entlang eines Messwegs angepasst wird.

5. Verfahren nach einem der voranstehenden Ansprüche,
**dadurch gekennzeichnet, dass**
- die numerische Apertur für einen Messpunkt anhand einer mittels eines Bildsensors detektierten Lichtintensität eingestellt wird, wobei insbesondere diejenige Apertur eingestellt wird, für die bei konstanter Beleuchtungsstärke einer Lichtquelle (34) eine maximale Intensität detektiert wird
und/oder
- die numerische Apertur rechnerisch bestimmt wird, insbesondere anhand einer vorgegebenen Sollgeometrie der Verzahnung (8) und eines vorgegebenen Messwinkels.

6. Verfahren nach einem der voranstehenden Ansprüche,
**dadurch gekennzeichnet, dass**
- das optische Messsystem (4) einen konfokalen Sensor aufweist, wobei die Geometrie der Verzahnung (8) durch konfokale Abstandsmessung erfasst wird und/oder
- ein Messen einer Geometrie der Verzahnung (8) mittels eines taktilen Messsystems (5) erfolgt.

7. Verfahren, mit den Verfahrensschritten:
- Messen einer Geometrie einer ersten Verzahnung gemäß einem Verfahren nach einem der Ansprüche 1 - 6;
- Messen einer Geometrie einer zweiten Verzahnung gemäß einem Verfahren nach einem der Ansprüche 1 - 6;
- wobei die erste Verzahnung eine von der zweiten Verzahnung verschiedenen Geometrie aufweist, und
- wobei die erste Verzahnung mit einer ersten numerischen Apertur gemessen wird,
- wobei die zweite Verzahnung mit einer zweiten numerischen Apertur gemessen wird und
- wobei die erste numerische Apertur von der zweiten numerischen Apertur verschieden ist.

8. Vorrichtung zum Messen von Verzahnungen,
- mit einem optischen Messsystem (4) zum Messen einer Geometrie einer Verzahnung (8);
- mit einer Aufnahme (6) zum Halten einer zu messenden Verzahnung (8) und mit einer Steuerung (10) zum Steuern eines Messablaufs,
- wobei die Steuerung zur Durchführung eines Verfahrens nach einem der Ansprüche 1 - 7 eingerichtet ist.

9. Vorrichtung nach Anspruch 7,
**dadurch gekennzeichnet, dass**
- das optische Messsystem (4) ein Linsensystem (36) mit einstellbarer Brennweite aufweist,
und/oder
- das optische Messsystem (4) eine Linse (26) mit einstellbarer Brennweite aufweist.

10. Vorrichtung nach einem der Ansprüche 7 - 9,
**dadurch gekennzeichnet, dass**
- ein taktiles Messsystem (5) zum Messen einer Geometrie einer Verzahnung (8) vorgesehen ist,
und/oder
- das optische Messsystem (4) einen konfokalen Sensor aufweist.
